# EUROPEAN PATENT SPECIFICATION

(11) **EP 2 450 247 B1**
(45) Date of publication and mention of the grant of the patent: **04.01.2017**
(21) Application number: 11186706.5
(22) Date of filing: 26.10.2011
(51) Int. Cl.: B60T 8/17, B60T 8/1761, B60T 8/1763, B60T 8/88

(54) **ANTILOCK BRAKE CONTROL SYSTEM**
STEUERUNGSSYSTEM FÜR ANTIBLOCKIERBREMSE
SYSTÈME DE COMMANDE DE FREINAGE ANTI-BLOCAGE

(30) Priority: 05.11.2010 JP 2010248480
(43) Date of publication of application: 09.05.2012
(73) Proprietor: Honda Motor Co., Ltd., Tokyo 107-8556 (JP)
(72) Inventor: Makabe, Takumi, Saitama, 351-0193 (JP); Kato, Shinichiro, Saitama, 351-0193 (JP)
(74) Representative: Ilgart, Jean-Christophe

(56) References cited:
- EP-A2- 0 392 686
- GB-A- 2 064 693

## Description

### [Technical Field]

The present invention relates to an antilock brake control system, and particularly to an antilock brake control system capable of appropriately performing antilock brake control on the basis of only a revolution speed of a wheel to which the antilock brake control is applied.

### [Background Art]

A familiar example of the antilock brake control system is an antilock brake control system in which, when a locked state of a wheel in conjunction with the rider's brake operation is detected, the release and retention of the brake pressure (braking force) are alternately repeated by doing things such as the on/off drive of a solenoid valve in order to avoid the continuation of the locked state of the wheel.

Patent Document 1 has disclosed an antilock brake control system in which, once a locked state of a wheel, to which the antilock brake control is applied, is judged on the basis of only a revolution speed of the wheel, the brake pressure is controlled in order to make the revolution speed of the wheel meet a predetermined target deceleration.

### [Prior Art Document]

[Patent Document 1] Japanese Patent Application Publication No. Sho 61-200055
Document GB 2 064 693 also discloses a relevant prior art

### [Summary of the Invention]

### [Problems to be Solved by the Invention]

The technology disclosed by Patent Document 1 makes it possible to reduce the number of wheel speed sensors, because the technology judges the locked state of the wheel on the basis of only a wheel speed of none other than the wheel unlike a traditional antilock control technology making a lock judgment on the basis of a comparison between a wheel speed of one wheel, on which the lock judgment is performed, and a wheel speed detected from the other wheel. On the other hand, the technology disclosed by Patent Document 1 is likely to reduce the braking efficiency during the antilock brake control in a case where an actual coefficient of friction of road surfaces is higher or lower than an estimated value, because the target deceleration to be applied during the antilock brake control is set up on the basis of an estimated coefficient of friction of road surfaces or the like with consideration given to the incapableness of detecting the speed of the vehicle.

An object of the present invention is to solve the foregoing problem with the prior art, and thus to provide an antilock brake control system capable of performing antilock brake control in accordance with actual road surface conditions on the basis of only a revolution speed of a wheel to which the antilock brake control is applied.

### [Means for Solving the Problems]

For the purpose of solving the above-mentioned problems, a first aspect of the present invention provides an antilock brake control system comprising: a front wheel revolution speed sensor (54) configured to detect a revolution speed (V) of a wheel (WF) of a vehicle (1); and antilock brake control means (65) configured to perform antilock brake control for dissolving a locked state of the wheel (WF) by controlling a brake pressure of a brake system of the wheel (WF) in accordance with the detected revolution speed (V), wherein: when a deceleration (G) calculated on the basis of the detected revolution speed (V) exceeds a predetermined value, which is a first slip detection threshold (G1), the antilock brake control means (65) judges that the front wheel (WF) is put into a locked state, and dissolves the locked state by controlling and thus releasing the brake pressure produced in accordance with a manipulation by a rider; the antilock brake control system includes road-surface friction estimating means (66) configured to find an estimated deceleration (Gs) from a data map on the basis of a return acceleration (Gf) which occurs when the revolution of the front wheel (WF) returns in conjunction with the control and release of the brake pressure, the estimated deceleration (Gs) being based on at least how large road surface friction is, and the estimated deceleration (Gs) serving as a benchmark for ease with which the vehicle (1) pulls up; and the antilock brake control means (65) calculates a target front wheel revolution speed (Vm) in accordance with the estimated deceleration (Gs), and controls the brake pressure during the antilock brake control in order that the revolution speed (V) becomes equal to the target front wheel revolution speed (Vm); and the antilock brake control means configured to restore the brake fluid pressure upon the revolution speed (V) of the front wheel (WF) reaching the target front wheel revolution speed (Vm), and to release the brake fluid pressure when it detects that the front wheel (WF) is nearing another locked state due to the braking force and the front wheel acceleration (G) exceeding a second slip detection threshold (G2) set at a deceleration smaller than the first slip detection threshold (G1), the antilock brake control means (65) configured to find the second slip detection threshold (G2) from a data map on the basis of the estimated deceleration (Gs).

A second aspect of the present invention provides the antilock brake control system, wherein the antilock brake control means (65) controls the brake pressure in order that the revolution speed (V) of the wheel (WF) becomes equal to the target front wheel revolution speed (Vm) by alternately repeating the release and restoration of the brake pressure.

A third aspect of the present invention provides the antilock brake control system, wherein the road surface friction estimating means (66) finds the estimated deceleration (Gs) by applying the detected return acceleration (Gf) to a data map specifying a relationship between the return acceleration (Gf) and the estimated deceleration (Gs).

A fourth aspect of the present invention provides the antilock brake control system, wherein the vehicle (1) is a motorcycle, and the wheel speed sensor (54) is provided to the front wheel (WF) of the motorcycle.

A fifth aspect of the present invention provides the antilock brake control system, wherein the revolution speed (V) is detected by the revolution speed sensor (54) configured to detect a passing state of a pulse generator (53) of a pulsar ring (52) rotating synchronously with the front wheel (WF), and the antilock brake control system includes: rear wheel revolution state detecting means (75) configured to detect whether or not a rear wheel (WR) of the motorcycle (1) is revolving; and front wheel revolution speed sensor failure detecting means (67) configured to judge that any one of the pulsar ring (52) and the revolution speed sensor (54) is detached, or that the vehicle (1) is in a wheelie state, in a case where no revolution speed (V) of the front wheel (WF) is detected although the revolution of the rear wheel (WR) is detected by the rear wheel revolution state detecting means (75).

A sixth aspect of the present invention provides the antilock brake control system, wherein the rear wheel revolution state detecting means (75) judges that the rear wheel (WR) is revolving, in a case where it is detected that: an engine of the motorcycle (1) is in operation; a transmission of the motorcycle (1) is in an in-gear state; and a clutch is in a connected state.

A seventh aspect of the present invention provides the antilock brake control system, wherein the revolution speed sensor (54) includes a first revolution speed sensor (54a) and a second revolution speed sensor (54b) which detect their respective pulse waveforms from the pulsar ring (52), the pulse waveforms having the same shape.

A eighth aspect of the present invention provides the antilock brake control system, wherein the first revolution speed sensor (54a) and the second revolution speed sensor (54b) are arranged in their respective places which shift output pulses from the respective first and second revolution speed sensors (54a, 54b) from each other by a phase which is not a half phase.

### [Effects of the Invention]

According to the first aspect, when a deceleration calculated on the basis of the detected revolution speed exceeds a predetermined value, the antilock brake control means judges that the front wheel is put into a locked state, and dissolves the locked state by controlling and thus releasing the brake pressure produced in accordance with a manipulation by a rider. The antilock brake control system includes road-surface friction estimating means configured to find an estimated deceleration on the basis of a return acceleration which occurs when the revolution of the front wheel returns in conjunction with the control and release of the brake pressure, the estimated deceleration being based on at least how large road surface friction is, and the estimated deceleration serving as a benchmark for ease with which the vehicle pulls up. The antilock brake control means calculates a target front wheel revolution speed in accordance with the estimated deceleration, and controls the brake pressure during the antilock brake control in order that the revolution speed becomes equal to the target front wheel revolution speed. Thus, the antilock brake control can be performed in accordance with the actual road surface condition on the basis of only the revolution speed of the wheel on which the antilock brake control is performed. This makes it no longer necessary to provide a revolution speed sensor to the other wheel on which no antilock brake control is performed, and makes it possible to reduce the number of parts, such as the revolution speed sensor, a pulsar ring configured to generate a sensor output and a stay.

According to the second aspect, the antilock brake control means controls the brake pressure in order that the revolution speed of the front wheel becomes equal to the target front wheel revolution speed by alternately repeating the release and restoration of the brake pressure. This makes it easy to make the front wheel revolution speed become equal to its target value.

According to the third aspect, the road surface friction estimating means finds the estimated deceleration by applying the detected return acceleration to a data map specifying a relationship between the return acceleration and the estimated deceleration (Gs). This makes it easy to find the estimated deceleration on the basis of the data map which is predetermined through experiments and the like with consideration given to the weight of the vehicle, the grip characteristic of the standard tire, the normal coefficient of friction of the road surfaces, and the like.

According to the fourth aspect, the vehicle is a motorcycle, and the wheel speed sensor is provided to the front wheel of the motorcycle. This makes it possible to obtain the motorcycle which has an enhanced stability by applying the antilock brake control to its front wheel which would otherwise make the vehicle body lose its stability when the wheel is locked.

According to the fifth aspect, the revolution speed is detected by the revolution speed sensor configured to detect a passing state of a pulse generator of a pulsar ring rotating synchronously with the front wheel (WF). The antilock brake control system includes: rear wheel revolution state detecting means configured to detect whether or not a rear wheel of the motorcycle is revolving; and front wheel revolution speed sensor failure detecting means configured to judge that any one of the pulsar ring and the revolution speed sensor is detached, or that the vehicle is in a wheelie state, in a case where no revolution speed of the front wheel is detected although the revolution of the rear wheel is detected by the rear wheel revolution state detecting means. Generally speaking, in a case of a configuration in which a revolution speed sensor is provided to one wheel alone, it is impossible to judge whether or not the cause of no sensor output is rooted in the failure related to the revolution speed sensor. However, the provision of the rear wheel revolution state detecting means makes it possible to detect the failure state even though no rear wheel revolution speed sensor is included.

According to the sixth aspect, the rear wheel revolution state detecting means judges that the rear wheel is revolving, in a case where it is detected that: an engine of the motorcycle is in operation; a transmission of the motorcycle is in an in-gear state; and a clutch is in a connected state. Thus, even in a case where no sensor configured to detect the revolution speed of the rear wheel is included, it is possible to judge that the state of no sensor output is rooted in the failure related to the revolution speed sensor by estimatingly detecting whether or not the rear wheel is revolving.

According to the seventh aspect, the revolution speed sensor includes a first revolution speed sensor and a second revolution speed sensor which detect their respective pulse waveforms from the pulsar ring, the pulse waveforms having the same shape. This makes it possible to enhance the resolution of a sensor output signal with the two revolution speed sensors arranged by shifting their respective locations from each other. The provision of the two revolution speed sensors makes it possible to enhance only the resolution without decreasing the strength of the pulsar ring, although the strength of the pulsar ring would be likely to decrease if the resolution would be intended to be enhanced by, for example, increasing the number of recessed portions or through-holes as the pulse generator of the pulsar ring. In addition, this makes it possible to continue the ABS control even in a case where a failure or something similar occurs in either of the two sensors.

According to the eighth aspect, the first revolution speed sensor and the second revolution speed sensor are arranged in their respective places which shift output pulses from the respective first and second revolution speed sensors from each other by a phase which is not a half phase. This makes it possible to place the two revolution speed sensors close to each other, and thus to avoid a portion to which to attach the revolution speed sensors becoming larger in size.

### [Brief Description of the Drawings]

Fig. 1 is a side view of a motorcycle to which an antilock brake control system of an embodiment of the present invention is applied.
Fig. 2 is a block diagram showing a configuration of the antilock brake control system of the embodiment of the present invention and peripheral devices thereof.
Fig. 3 is a block diagram showing a configuration of a hydraulic disc brake system for a front wheel.
Fig. 4 is a time chart showing a flow of antilock brake control of the embodiment.
Fig. 5 is a flowchart showing an ABS control sequence of the embodiment.
Fig. 6 is a data map showing a relationship between a front wheel return acceleration and an estimated deceleration.
Fig. 7 is a flowchart showing a sequence for a process of judging an ABS operation.
Fig. 8 is a flowchart showing a sequence for a process of conducting a diagnosis on whether or not the front wheel revolution speed sensor is detached.
Fig. 9 is a partially-enlarged view of a pulsar ring.
Fig. 10 is a schematic diagram showing a pulse waveform obtained from a sensor output from the revolution speed sensor.

### [Modes for Carrying out the Invention]

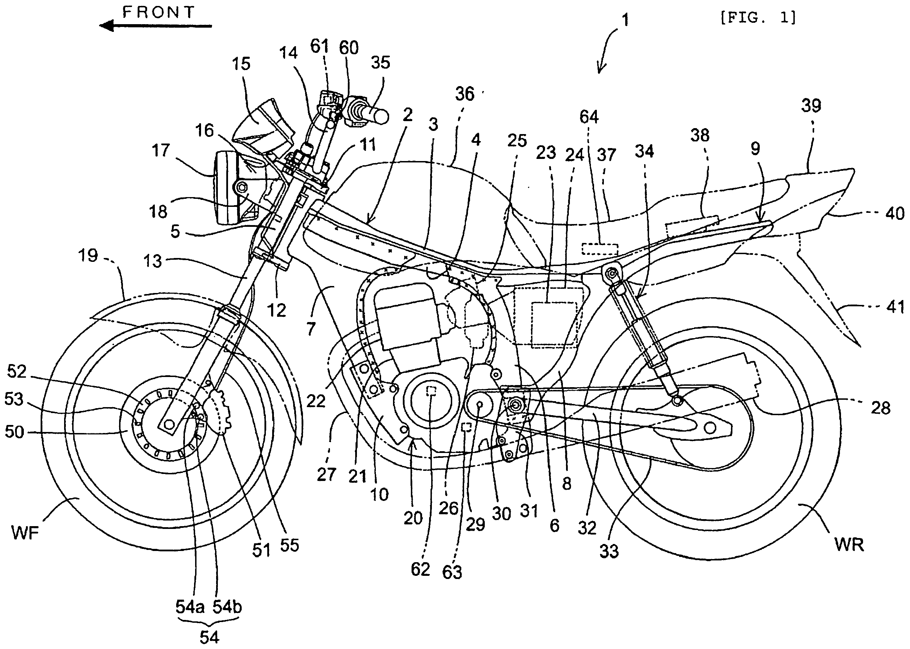

Detailed descriptions will be hereinbelow provided for a preferable embodiment of the present invention while referring to the drawings. Fig. 1 is a side view of a motorcycle 1 to which an antilock brake control system of an embodiment of the present invention is applied. The motorcycle 1 includes one main frame (mono-backbone frame) 2 extending in the vehicle front-rear direction. A steering stem, which is not illustrated, is rotatably pivotally supported by a head pipe 5 provided in the front end portion of the main frame 2. Paired left and right front forks 13 rotatably pivotally supporting a front wheel WF are rotatably attached to the steering stem with the assistance of a top bridge 11 and a bottom bridge 12. The front wheel WF is capable of being steered by a handlebar 14 attached to the top portion of the top bridge 11.

The main frame 2 with a hollow structure is formed by spot-welding its upper and lower members together in the vehicle vertical direction. The upper and lower members are made from the respective pressed steel plates. In addition, a front engine hanger 7 extending downward in the vehicle-widthwise center is attached to the front portion of the main frame 2. The front engine hanger 7 made from a pressed steel plate is joined to the main frame 2 by spot-welding its upper edge portion to the lower member of the main frame 2 in the vehicle-widthwise direction. An engine mount 10 is provided to the lower end portion of the front engine hanger 7.

A rear engine hanger 6 extending downward in the vehicle-widthwise center is attached in the rear of the front engine hanger 7. In addition, paired left and right rear cushion unit supporting frames 8 are joined to the outer portions of the rear engine hanger 6 in the vehicle-widthwise direction around a pivot shaft 30 by spot-welding. The rear cushion unit supporting frames 8 constitute the undersurface-side portions of a seat frame 9 in a way that: the rear cushion unit supporting frames 8 have a form which extends to a rear end portion of the seat frame 9; and the rear cushion unit supporting frames 8 are joined to the upper member of the main frame 2. Furthermore, paired left and right pivot plates 31 for supporting the pivot shaft 30 at its outermost parts in the vehicle-widthwise direction are attached to the outer portions of the rear cushion unit supporting frames 8 in the vehicle-widthwise direction around the pivot shaft 30, respectively.

A swing arm 32 rotatably pivotally supporting a rear wheel WR is swingably pivotally supported by the pivot shaft 30 in the rear lower portion of the main frame 2. Rear portions of the swig arm 32 are hung from the seat frame 9 with the assistance of rear cushion units 34. A rotational motive power of an engine 20 is transmitted to the rear wheel WR via a drive chain 33.

The engine 20 is placed in front of the pivot shaft 30 and under the main frame 2. The engine 20 includes a cylinder 21 and a cylinder head 22. A throttle body 25, inclusive of a fuel injection system, is attached to a rear portion of the cylinder head 22. An air cleaner box 24 is connected to a rear portion of the throttle body 25. A secondary fuel filter 26 for filtering the fuel is placed on the left side of the throttle body 25 in the vehicle-widthwise direction. A battery 23 is placed on the left side of the air cleaner box 24 in the vehicle-widthwise direction. Moreover, an exhaust pipe 27 for guiding the combustion gas of the engine 20 to a muffler 28 placed in the rear end portion of the vehicle body is attached to the front portion of the engine 20.

An engine revolution speed sensor 62 for detecting the engine speed is provided in proximity of a crankshaft. A neutral switch (neutral SW) 63 for detecting the neutral state of a transmission on the basis of the turned position of a shift drum is provided to the engine 20. A clutch lever 60 for operating the clutch of the engine 20 for its disconnection and connection is provided to the left portion of the handlebar 14. A clutch switch (clutch SW) 61 for detecting the operated state of the clutch lever 60 is provided to a base of the clutch lever 60. The disconnected and connected states of the clutch are designed to be estimatingly detected on the basis of an output signal from the clutch switch 61.

A headlamp 17, which is shaped almost like a round when viewed from the front, is placed in front of the head pipe 5 with the assistance of paired left and right light stays 18. A meter unit 15 is supported by a meter supporting stay 16 integral with the light stays 18. In addition, a front fender 19 is placed over the front wheel WF. A fuel tank 36 is placed over the main frame 2, and a seat 37 is attached to the rear portion of the fuel tank 36. A seat cowl 39, a rear light unit 40 and a rear fender 41 are supported by a rear end portion of the seat frame 9 formed integrally with the main frame 2.

The front wheel WF is equipped with a hydraulic disc brake system which includes a brake disc 50 and a brake caliper 51. This hydraulic disc brake system is designed to produce a braking force for the front wheel WF through a mechanism in which: when the rider manipulates a front wheel brake lever (not illustrated) attached to the right portion of the handlebar 14, the pressure of the brake fluid filled in a first hydraulic hose 55 is raised; and thereby, a brake pad held by the brake caliper 51 is pressed against the brake disc 50.

A front wheel revolution speed sensor 54 for detecting the revolution speed of the front wheel WF is fixed to the front forks 13. On the other hand, a pulsar ring 52 fixed to, and rotating synchronously with, the brake disc 50 is provided on the inner side of the brake disc 50. As pulse generators, multiple through-holes 53 are formed in the pulsar ring 52 at equal intervals. The front wheel revolution speed sensor 54 is disposed in proximity of the pulsar ring 52 with a predetermined clearance in between, and detects the passing state of the through-holes 53 without contact. The embodiment raises the resolution of the sensor output without increasing the number of the through-holes 53 of the pulsar ring 52, and concurrently forms the front wheel revolution speed sensor 54 from two identical parts, which include a first front wheel revolution speed sensor 54a and a second front wheel revolution speed sensor 54b, as a fail-safe solution for an unlikely failure.

The motorcycle 1 is configured to perform antilock brake control (hereinafter referred to as "ABS control" from time to time) in which, once a locked state of the front wheel WF in conjunction with the rider's brake operation is detected on the basis of the front wheel revolution speed detected by the front wheel revolution speed sensor 54, the on and off of the braking force are alternately repeated by alternately repeating the release and retention of the brake pressure (the pressure of the brake fluid) for the purpose of avoiding the continuation of the locked state of the front wheel WF. In the embodiment, the antilock brake control system is applied to the front wheel WF alone.

An FI-ECU 38 for controlling the fuel injection system, an ignition device and the like is placed on the top surface of the seat frame 9. An ABS-ECU 64 for performing the antilock brake control on the front wheel WF is placed in front of the FI-ECU 38 in the vehicle front-rear direction.

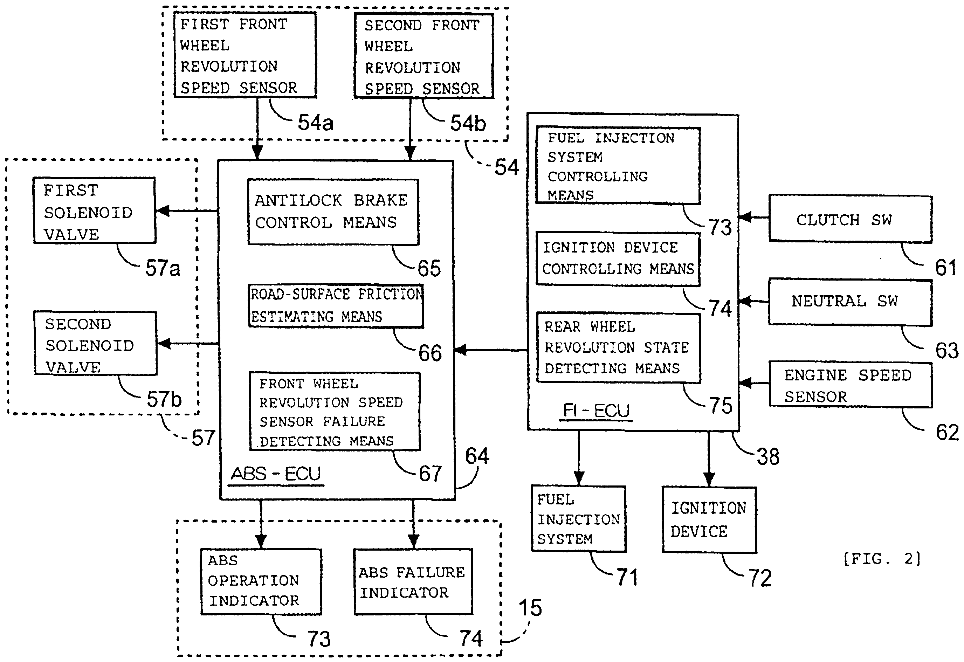

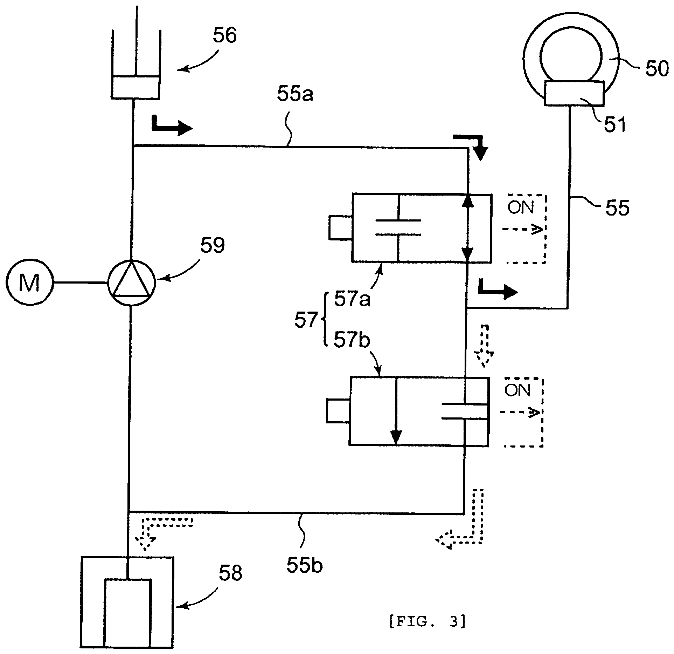

Fig. 2 is a block diagram showing a configuration of the antilock brake control system of the embodiment of the present invention and peripheral devices thereof. In addition, Fig. 3 is a block diagram showing a configuration of a hydraulic disc brake system for the front wheel WF. The same reference numerals denote the same or similar component parts.

The sensor output from the front wheel revolution speed sensor 54 including the first front wheel revolution speed sensor 54a and the second front wheel revolution speed sensor 54b is inputted into the ABS-ECU 64. The ABS-ECU 64 includes: antilock brake control means 65 for performing antilock brake control on the basis of the sensor output from the front wheel revolution speed sensor 54; road-surface friction estimating means 66 for detecting an estimated deceleration of the vehicle body which is used for the antilock brake control; and front wheel revolution speed sensor failure detection means 67 for detecting a failure state of the front wheel revolution speed sensor 54.

The antilock brake control means 65 is configured to perform the antilock brake control by driving a solenoid valve 57, which is provided to the hydraulic disc brake system, in a case where the front wheel WF comes into a locked state due to the rider's brake operation while the vehicle is running. The solenoid valve 57 includes a first solenoid valve 57a and a second solenoid valve 57b.

The meter unit 15 includes: an ABS operation indicator 73 for informing an operation state of the antilock brake control system; and an ABS failure indicator 74 configured to flash when the antilock brake control system fails. Descriptions will be later provided for conditions for operations of the other various indicators each configured to flash in accordance with an instruction from the ABS-ECU 64.

The FI-ECU 38 includes: fuel injection system controlling means 73 for controlling the fuel injection system 71; ignition device controlling means 74 for controlling the ignition device 72; and rear wheel revolution state detecting means 75 for detecting whether or not the rear wheel WR of the motorcycle 1 is revolving. The rear wheel revolution state detecting means 75 is configured to judge that the rear wheel WR is revolving in a case where: the clutch SW 61 is turned on when the clutch is put into a connected state; the neutral SW 63 is turned off when the transmission is put into any in-gear state other than in into a neutral state; and the engine speed sensor 62 detects an engine speed which is equal to or greater than a predetermined value.

Referring to Fig. 3, the hydraulic disc brake system of the embodiment has the first solenoid valve 57a and the second solenoid valve 57b in its hydraulic passage. The two hydraulic solenoid valves 57a, 57b are set in an off state (shown in Fig. 3) during a normal operation in which no antilock brake control is performed. Once the front wheel brake lever is manipulated while the two solenoid valves are in this state, a hydraulic pressure produced by a master cylinder 56 linked to the front wheel brake lever is transmitted to a first hydraulic hose 55 and a brake caliper 51 via a second hydraulic hose 55a and the first solenoid valve 57a. At this time, the second solenoid valve 57b, which is set in the off state, closes a third hydraulic hose 55b.

On the other hand, once the two solenoid valves 57a, 57b are driven, in other words, once the two solenoid valves 57a, 57b are set into the on state, the first solenoid valve 57a closes the hydraulic passage, and the second solenoid valve 57b concurrently puts the hydraulic passage into a communicating state. Thereby, the hydraulic pressure produced by the master cylinder 56 is no longer transmitted to the brake caliper 51, and the brake fluid in the first hydraulic hose 55 flows into the third hydraulic hose 55b via the second solenoid valve 57b, as indicated by arrows marked with dashed lines. As a result, the hydraulic pressure decreases. Thereafter, the two solenoid valves 57a, 57b are returned to the off (halt) state once predetermined conditions, which will be described later, are satisfied. Thereby, the hydraulic pressure produced by the master cylinder 56 is transmitted to the brake caliper 51 once again.

A pump 59 driven by a motor M has a function of circulating the brake fluid, which would otherwise return to a reservoir tank 58 via the third hydraulic hose 55b, to the second hydraulic passage 55a during the antilock brake control.

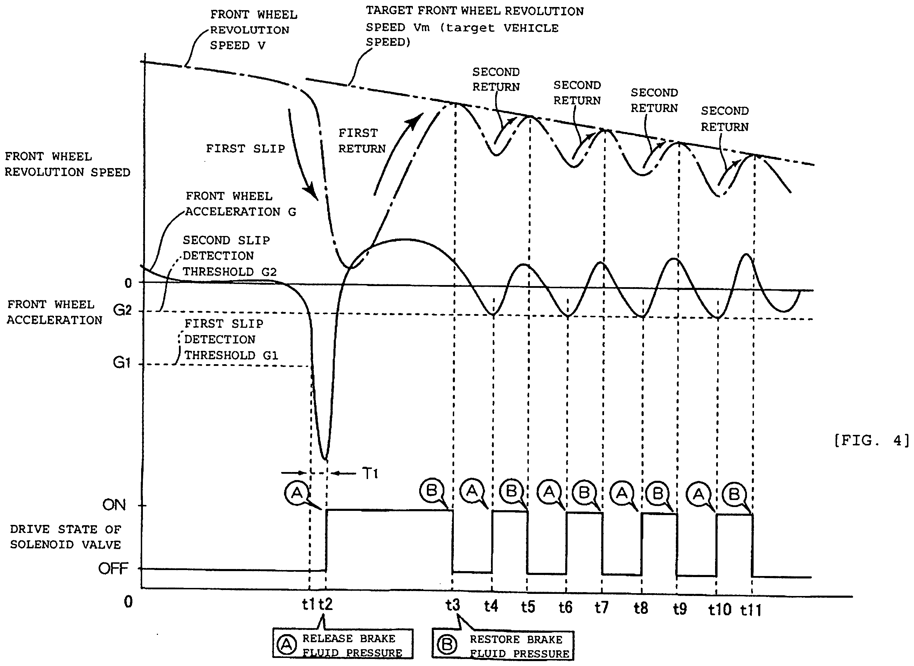

Fig. 4 is a time chart showing a flow of antilock brake control of the embodiment. The antilock brake control system of the embodiment is characterized in that a target vehicle speed serving as a benchmark for controlling the hydraulic pressure during the antilock brake control is calculated on the basis of the sensor output obtained from the detection by the front wheel revolution speed sensor 54, but not set at a predetermine value. To put it specifically, the antilock brake control system is configured in a way that: ease with which the vehicle pulls up, varying depending on road surface conditions, a wear degree of the tire, and the like, is detected on the basis of an acceleration (return acceleration) G of the front wheel WF which takes place when the brake hydraulic pressure is released during the antilock brake control; and the detection result is reflected on the calculation of the target vehicle speed.

This time chart shows the front wheel revolution speed V, the front wheel acceleration G, and the driven states of the solenoid valve from the top to the bottom. The time chart shows the sequence from the occurrence of the locked state of the front wheel WF in conjunction with the rider's brake operation through the performing of the antilock brake control.

The embodiment has a configuration in which, on the basis of the front wheel acceleration G, it is judged that the front wheel WF is put into the locked state. A time t1, it is detected, from a first slip in conjunction with the brake operation while the vehicle is running, that the front wheel acceleration G becomes less than a predetermined first slip detection threshold G1. In other words, it is detected that the absolute value of the negative acceleration (deceleration) of the front wheel WF exceeds the predetermined value. Thereby, the antilock brake control means 65 judges that the front wheel WF is put into the locked state.

Subsequently, at time t2 after a predetermined length of time T1 passes, the solenoid valve 57 is switched from the off state to the on state. Thereby, the brake fluid pressure is released (indicated by a balloon encircling the letter A).

Once the brake fluid pressure is released at time t2, the front wheel WF accelerates (makes a first return) in accordance with the force of friction between the front wheel WF and the road surface. A front wheel acceleration Gf at a time of this first return varies depending on the road surface condition, the wear degree and air pressure of the tire, the road surface contact pressure and the like. The embodiment finds at least an estimated deceleration Gs of the vehicle body, which is attributable to the road surface friction and is used as a benchmark for ease with which the vehicle body pulls up, on the basis of the first front wheel return acceleration Gf (the first return acceleration Gf1) detected during this first return.

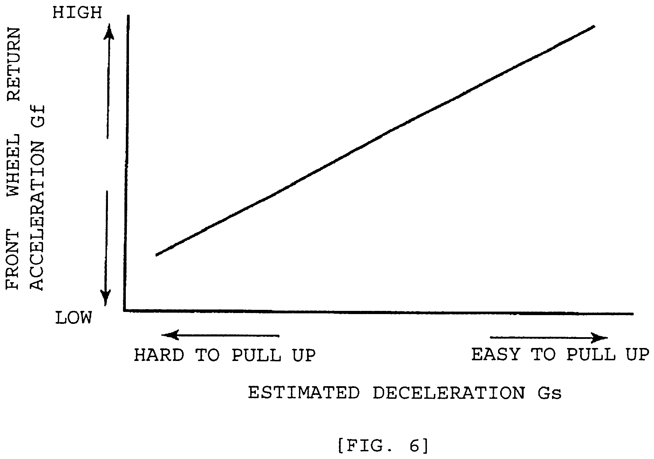

As shown in Fig. 6, the estimated deceleration Gs is found by use of a data map which shows the relationship between the front wheel return acceleration Gf and the estimated deceleration Gs. This data map is beforehand determined through experiments and the like, and is stored in the road-surface friction estimating means 66. Subsequently, a target vehicle speed for the vehicle body to be set for the ABS control is calculated on the basis of the thus-found estimated deceleration Gs, the vehicle speed immediately before starting the ABS control, and the like. Incidentally, once the target vehicle speed is calculated, the target vehicle speed is converted into a target front wheel revolution speed Vm by using the outer diameter dimension of the front wheel WF as a parameter.

At time t3, the solenoid valve 57 is switched off in response to the front wheel revolution speed V reaching the target front wheel revolution speed Vm as a result of the first return. Thereby, the brake fluid pressure is restored, and the braking force is thus produced for the front wheel WF again (indicated by a balloon encircling the letter B).

Thereafter, at time 4, the brake fluid pressure is released when it is detected that: the front wheel WF comes near another locked state due to the braking force produced at time t3; and the front wheel acceleration G of the front wheel WF becomes less than a second slip detection threshold G2. This second slip detection threshold G2 is found from a data map, which is similar to the data map shown in Fig. 6, on the basis of the estimated deceleration Gs found in conjunction of the first return as well.

Once the brake fluid pressure is released at time t4, the front wheel WF accelerates (makes a second return) in accordance with the force of friction between the front wheel WF and the road surface. The antilock brake control means 65 is configured: to calculate the estimated deceleration Gs, again, on the basis of the front wheel return acceleration Gf (the second return acceleration Gf2) detected during the second return: and thus to correct the target front wheel revolution speed Vm and the second slip detection threshold.

The subsequent antilock brake control is performed under a cyclic control in which the release and restoration of the brake fluid pressure are alternately repeated until the locked state of the front wheel WF no longer takes place, in a way that the brake fluid pressure is restored at time t5, released at time t6, restored at time t7, released at time t8, restored at time t9, released at time t10, restored at time t11, and so on. Each time the second return acceleration Gf is detected in conjunction with the second restoration of the brake fluid pressure, the target front wheel revolution speed Vm and the second slip detection threshold G2 are corrected.

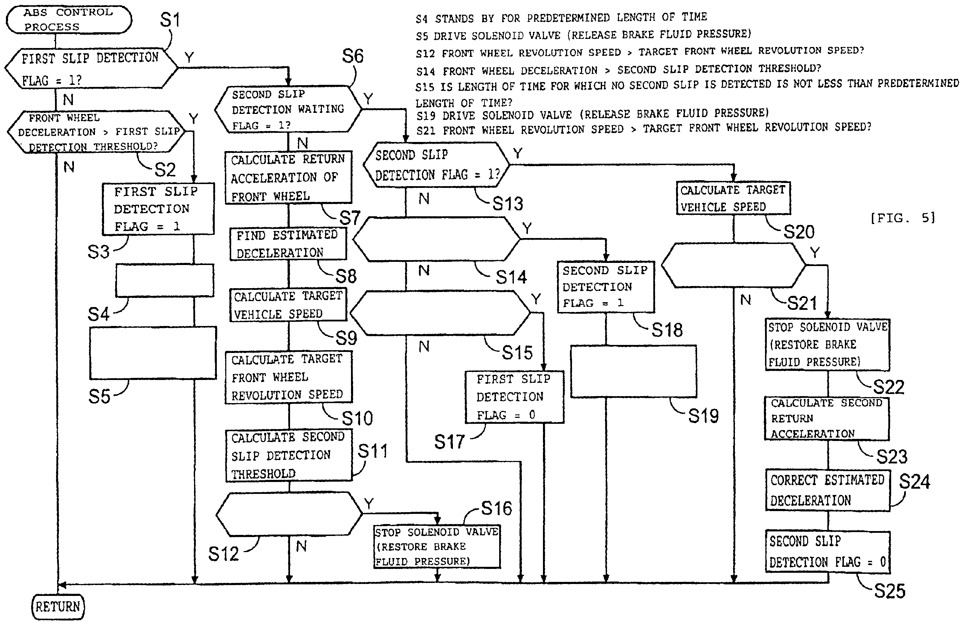

Fig. 5 is a flowchart showing the ABS control sequence of the embodiment. In step S1 it is judged whether or not a first slip detection flag is set at 1 (one), in other words, whether or not the first slip detection flag is set on. If a negative judgment is made in step S1 the process proceeds to step S2, where it is judged whether or not the front wheel deceleration (the front wheel negative acceleration) G exceeds the first slip detection threshold G1.

If an affirmative judgment is made in step S2, the process proceeds to step S3, where the first slip detection flag is set at 1 (one). Subsequently, the process stands by for a predetermined length of time in step S4. Thereafter, in step S5, the solenoid valve 57 (see Figs. 2 and 3) is driven (turned on), and the first control is thus performed to release the brake fluid pressure. Incidentally, if a negative judgment is made in step S2, the series of controls are terminated without the process proceeding to any other step.

If an affirmative judgment is made in step S1 in other words, if it is judged in step S1 that the first slip detection flag is set at 1 (one), the process proceeds to step S6, where it is judged whether or not a second slip detection waiting flag is set at 1 (one), in other words, whether or not the second slip detection waiting flag is set on. If a negative judgment is made in step S6, the return acceleration Gf of the front wheel WF is calculated in step S7. Subsequently, in step S8, the estimated deceleration Gs is found by using the return acceleration Gf and the data map.

In step S9, the target vehicle speed is calculated on the basis of the thus-found estimated deceleration Gs. Thereafter, in step S10, the target front wheel revolution speed Vm is calculated on the basis of the target vehicle speed. Incidentally, the target vehicle speed and the target front wheel revolution speed Vm are converted values which are calculated by using the outer diameter of the front wheel as the parameter. The target front wheel revolution speed Vm may be directly found on the basis of the estimated deceleration Gs.

In step S11, the second slip detection threshold G2 is calculated. In step S12, it is judged whether or not the front wheel revolution speed V exceeds the target front wheel revolution speed Vm. If an affirmative judgment is made in step S12, the process proceeds to step S16, where the solenoid valve 57 is stopped, in other words, the brake fluid pressures is restored. Subsequently, the series of controls are terminated. Incidentally, if a negative judgment is made in step S12, the series of controls are terminated without the process proceeding to any other step.

If an affirmative judgment is made in step S6, in other words, if it is judged in step S6 that the second slip detection waiting flag is set at 1 (one), the process proceeds to step S13. In step S13, it is judged that a second slip detection flag is set at 1 (one), in other words, it is judged whether or not the second slip detection flag is set on as a result of detecting the second slip. If a negative judgment is made, the process proceeds to step S14.

In step S14, it is judged whether or not the front wheel deceleration (the front wheel negative acceleration) G exceeds the second slip detection threshold G2. If an affirmative judgment is made in step S14, the process proceeds to step S18, where the second slip detection flag is set at 1 (one). Subsequently, in step S19, the solenoid valve is driven (i.e., the brake fluid pressure is released). Thereafter, the series of controls are terminated.

If a negative judgment is made in step S14, it is judged in step S15 whether or not a length of time for which no second slip is detected is equal to or longer than a predetermined length of time. If an affirmative judgment is made in step S15, the first slip detection flag is set at 0 (zero), in other words, the first slip detection flag is set off, and the series of controls are terminated. This is because, in a case where no second slip is detected for the predetermined length of time during the ABS control, it is judged that the motorcycle 1 is no longer in the braked state needing the ABS control, and preparation is made to detect the next first slip. If the rider pulls the brake lever so strongly that the front wheel is put into the locked state, the foregoing scheme makes it possible for the motorcycle: to start the ABS control by applying the predetermined first slip detection threshold G1 at first; and subsequently to perform the antilock brake control in which the release and retention of the brake fluid pressure is alternately repeated by applying the second slip detection threshold G2, which is set at the deceleration smaller than the first slip detection threshold G1, in order to maintain a slip efficiency (for example, 10 to 15%) which maximizes the braking efficiency. Incidentally, if a negative judgment is made in step S15, in other words, if it is judged in step S15 that the length of time for which no second slip is detected is shorter than the predetermined length of time, the series of controls are terminated without the process proceeding to any other step.

If an affirmative judgment is made in step S13, in other words, if it is judged in step S13 that the second slip detection waiting flag is set at 1 (one), the process proceeds to step S20, where the target vehicle speed is calculated. As described above, the target vehicle speed is converted into the target front wheel revolution speed Vm by using the outer diameter of the front wheel WF as the parameter.

Subsequently, in step S21, it is judged whether or not the front wheel revolution speed V exceeds the target front wheel revolution speed Vm. If an affirmative judgment is made in step S21, the process proceeds to step S22, where the solenoid valve 57 is stopped. Thereafter, in step S23, the second return acceleration Gf2 is calculated. Afterward, in step S24, the estimated deceleration Gs is corrected by use of the second return acceleration Gf2 and the data map.

In step S25, the second slip detection flag is set at 0 (zero), in other words, the second slip detection flag is set off, and the series of controls are terminated. Incidentally, if a negative judgment is made in step S21, the series of controls are terminated.

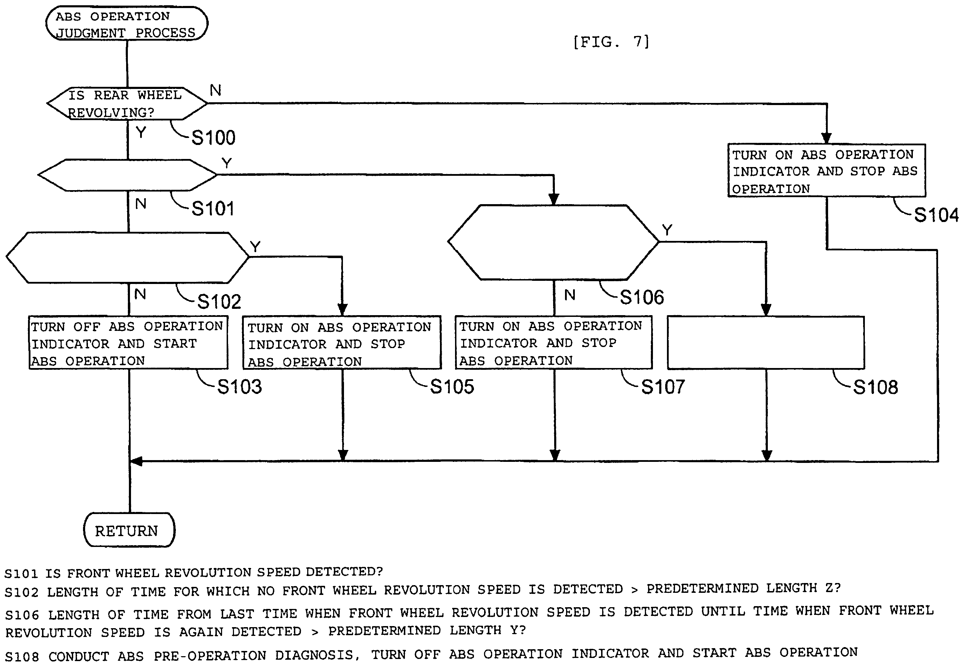

Fig. 7 is a flowchart showing a sequence for a process of judging the ABS operation. The ABS operation indicator 73 (see Fig. 2) included in the meter unit 15 of the motorcycle 1 keeps its light on in order that, while the antilock brake control system is out of operation, the ABS operation indicator 73 informs the rider of this out-of-operation status. The ABS operation indicator 73 is configured to keep its light off while the motorcycle 1 is ready to start the antilock brake control during the normal run of the motorcycle 1. In step S100, the rear wheel revolution state detecting means 75 (see Fig. 2) judges whether or not the rear wheel WR is revolving. If an affirmative judgment is made in step S100, the process proceeds to step S101. As described above, the rear wheel revolution state detecting means 75 is configured to judge that the rear wheel WR is revolving in the case where: the clutch is put in the connected state; the transmission is put in the neutral state; and the engine speed equal to or greater than the predetermined value is detected.

If a negative judgment is made in step S100, the process proceeds to step S104 because the negative judgment means that the motorcycle 1 is not in the running state. In step S104, the light of the ABS operation indicator 73 in the meter unit 15 is turned on, and the operation of the antilock brake control system is stopped. Thereby, the series of controls are terminated.

In step S101, it is judged whether or not the front wheel revolution speed V is detected, in other words, it is judged whether or not a sensor output is outputted from the front wheel revolution speed sensor 54. If a negative judgment is made in step S101, the process proceeds to step S102. In step S102, it is judged whether or not the length of time for which no front wheel revolution speed V is detected is greater than a predetermined length Z of time. If a negative judgment is made in step S102, the light of the ABS operation indicator 73 is turned off, and the operation of the ABS is concurrently started. Thereby, the series of controls are terminated. The judgment made in step S102 makes it possible to continue the operation of the ABS for only a short length of time, even if no front wheel revolution speed V is detected while the rear wheel WR is revolving.

On the other hand, if an affirmative judgment is made in step S102, the process proceeds to step S105 because the affirmative judgment means that: the length of time for which no front wheel revolution speed V is detected while the rear wheel WR is revolving is too long; and some failure occurs in the detection system for detecting the front wheel revolution speed V. In step S105, the light of the ABS operation indicator 73 is turned on, and the operation of the ABS is concurrently stopped. Thereby, the series of controls are terminated.

If an affirmative judgment is made in step S101, the process proceeds to the step S106, where it is judged whether or not a length of time from the last time when the front wheel revolution speed V is detected until a time when the front wheel revolution speed V is again detected is longer than a predetermined length Y of time. If a negative judgment is made in step S106, the process proceeds to step S107 because the negative judgment means that: although the front wheel revolution speed V is detected, the length of time having passed until the front wheel revolution speed V is again detected is too long; and some failure may occur in the detection system for detecting the front wheel revolution speed V. In step S107, the light of the ABS operation indicator 73 is turned on, and the operation of the ABS is stopped. Thus, the series of controls are terminated.

If an affirmative judgment is made in step S106, the process proceeds to step S108, where an ABS pre-operation diagnosis is carried out. Subsequently, the light of the ABS operation indicator 73 is turned off, and the operation of the ABS is started. Thereby, the series of controls are terminated.

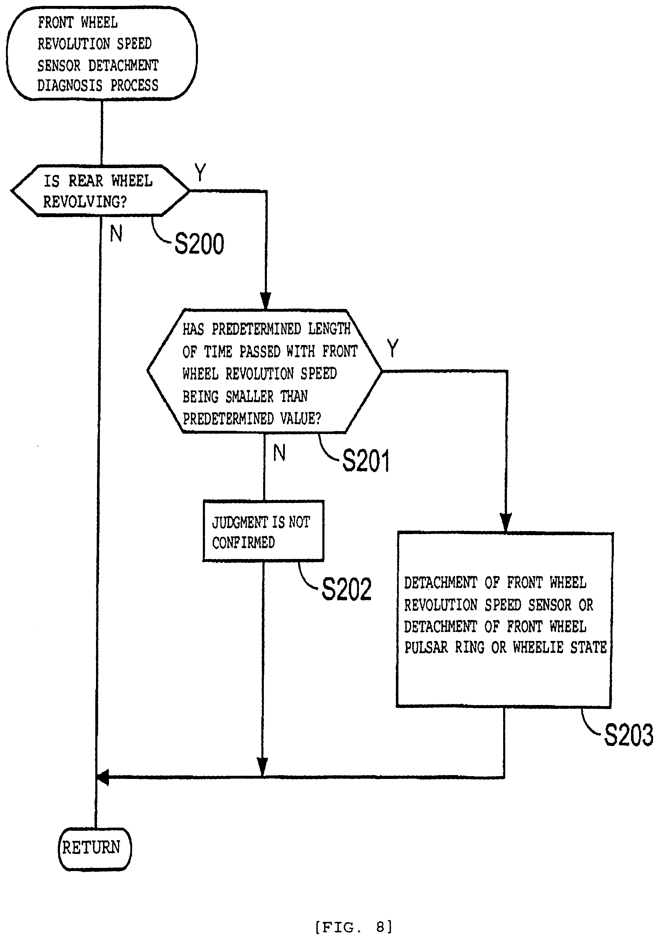

Fig. 8 is a flowchart showing a sequence for a process of conducting a diagnosis on whether or not the front wheel revolution speed sensor is detached. The process is carried out in accordance with this flowchart in a case when no sensor output comes from either the first front wheel revolution speed sensor 54a or the second front wheel revolution speed sensor 54b. In step S200, the rear wheel revolution state detecting means 75 judges whether or not the rear wheel is revolving. If an affirmative judgment is made in step S200, the process proceeds to step S201.

In step S201, it is judged whether or not a predetermined length of time has passed with the front wheel revolution speed V being smaller than a predetermined value. If an affirmative judgment is made in step S201, the process proceeds to step S203, where it is confirmed that the reason why no sensor output comes from either the first front wheel revolution speed sensor 54a or the second front wheel revolution speed sensor 54b is the detachment of the front wheel revolution speed sensor 54, the detachment of the pulsar ring 52, or the wheelie state of the motorcycle 1. Subsequently, the series of controls are terminated. In conjunction with this, the ABS-ECU 64 (see Fig. 2) turns on the light of the ABS failure indicator 74 in the meter unit 15, and is thereby capable of informing the rider that some failure occurs in the detection system for detecting the front wheel revolution speed V. Incidentally, if a negative judgment is made in step S201, it is judged in step S202 that the judgment is not confirmed. Thereafter, the series of controls are terminated without the process proceeding to any other step.

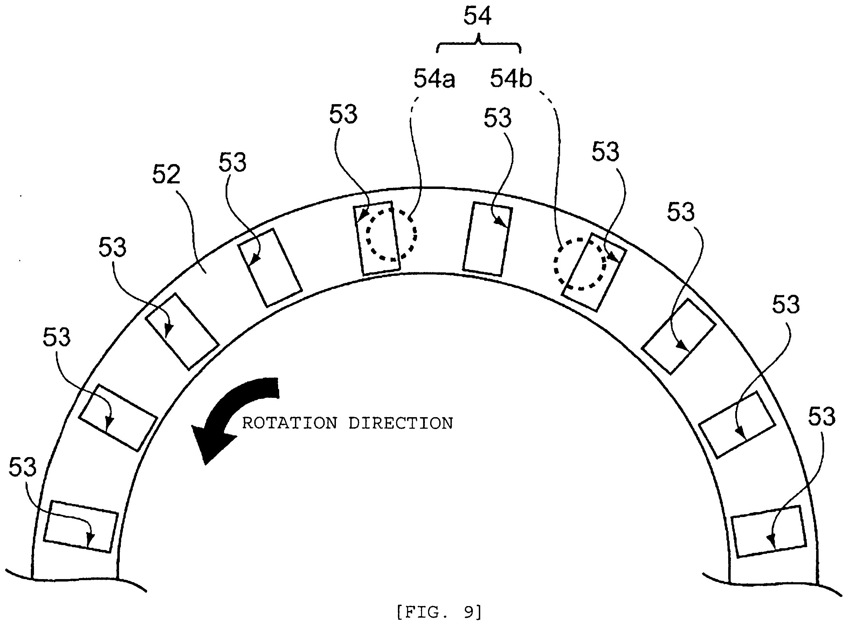

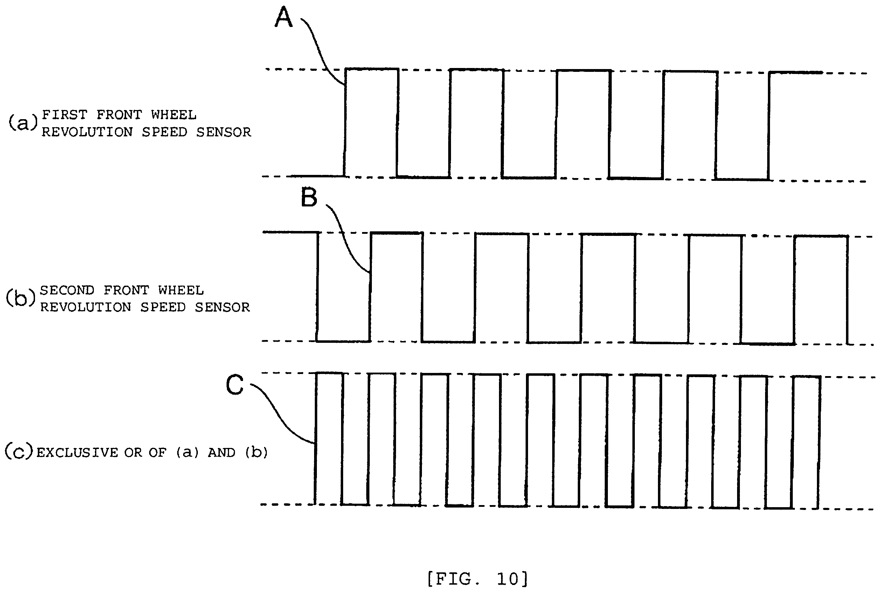

Fig. 9 is a partially-enlarged view of the pulsar ring 52. Furthermore, Fig. 10 is a schematic diagram showing a pulse waveform obtained from a sensor output from the revolution speed sensor 54. As described above, the pulsar ring 52 fixed to and rotating synchronously with the brake disc 50 has a configuration in which multiple through-holes 53 are formed in a ring-shaped steel plate at equal intervals. The first front wheel revolution speed sensor 54a and the second front wheel revolution speed sensor 54b, which are formed from their respective identical parts, are placed in a way that, as shown in Figs. 10(a) and 10(b), the identical waveforms outputted from the respective first and second front wheel revolution speed sensors 54a, 54b are shifted from each other by a quarter phase (90 degrees). This makes it possible to almost double the resolution of the front wheel revolution speed sensor 54 by use of the exclusive OR shown in Fig. 10(c) of the waveforms respectively shown in Figs. 10(a) and 10(b).Incidentally, in order to take a valid exclusive OR, the two sensors 54a, 54b may be respectively placed in arbitrary positions, except for positions which make the phase difference between the two sensor outputs equal to a half phase (180 degrees).

As described above, the antilock brake control system of the present invention is capable of performing an appropriate antilock brake control in accordance with ease with which the vehicle body pulls up, which is influenced by the road surface conditions and the wear degree of the tire, because: the antilock brake control system finds the estimated deceleration on the basis of the return acceleration of the wheel when the brake fluid pressure is released during the antilock brake control; and the antilock brake control system performs the antilock brake control in a way that the actual deceleration becomes equal to the estimated deceleration.

It should be noted that the structure of the brake system, the structure of the hydraulic lines and solenoid valves in the brake system, the structure of the front wheel revolution speed sensor, the data map representing the relationship between the front wheel return acceleration and the estimated deceleration, the setting of the first and second slip detection thresholds, and the like are not limited to what have been described above, and can be modified variously. For example, the brake system may be of a hydraulic double-disc type, of a mechanical drum type, or of another type instead of the brake system of the hydraulic single-disc type. In addition, the pulsar ring may be one in which recesses and protrusions enabling a pulse signal to be detected are formed instead of the through-holes. Furthermore, although the foregoing embodiment estimatingly detects the connected state of the clutch on the basis of how the clutch lever is manipulated, another configuration may be employed in which the clutch SW is provided to a different member which drives in connection with the manipulation of the clutch lever. As far as the hydraulic clutch is concerned, yet another configuration may be employed in which the pressure of the hydraulic hose is detected. The application of the antilock brake control system of the present invention is not limited to the motorcycle, and the antilock brake control system of the present invention can be applied to various vehicles such as a saddle riding-type three-wheel vehicle and a saddle riding-type four-wheel vehicle.

### [Explanation of Reference Numerals]

1 motorcycle (vehicle)
50 brake disc
51 brake caliper
54 front wheel revolution speed sensor
54a first front wheel revolution speed sensor
54b second front wheel revolution speed sensor
57 solenoid valve
57a first solenoid valve
57b second solenoid valve
56 master cylinder
61 clutch SW
62 engine speed sensor
63 neutral SW
65 antilock brake control means
66 road-surface friction estimating means
67 front wheel revolution speed sensor failure detecting means
73 ABS operation indicator
74 ABS failure indicator
75 rear wheel revolution state detecting means
WF front wheel
WR rear wheel

## Claims

1. An antilock brake control system comprising:
a front wheel revolution speed sensor (54) configured to detect a revolution speed (V) of a wheel (WF) of a motorcycle (1); and
antilock brake control means (65) configured to perform antilock brake control for dissolving a locked state of the wheel (WF) by controlling a brake pressure of a brake system of the wheel (WF) in accordance with the detected revolution speed (V), wherein:
when a deceleration (G) calculated on the basis of the detected revolution speed (V) exceeds a predetermined value, which is a first slip detection threshold (G1), the antilock brake control means (65) judges that the front wheel (WF) is put into a locked state, and dissolves the locked state by controlling and thus releasing the brake pressure produced in accordance with a manipulation by a rider;
the antilock brake control system includes road-surface friction estimating means (66) configured to find an estimated deceleration (Gs) from a data map on the basis of a return acceleration (Gf) which occurs when the revolution of the front wheel (WF) returns in conjunction with the control and release of the brake pressure, the estimated deceleration (Gs) being based on at least how large road surface friction is, and the estimated deceleration (Gs) serving as a benchmark for ease with which the vehicle (1) pulls up; and
the antilock brake control means (65) calculates a target front wheel revolution speed (Vm) in accordance with the estimated deceleration (Gs), and controls the brake pressure during the antilock brake control in order that the revolution speed (V) becomes equal to the target front wheel revolution speed (Vm); and
the antilock brake control means (65) configured to restore the brake fluid pressure upon the revolution speed (V) of the front wheel (WF) reaching the target front wheel revolution speed (Vm), and to release the brake fluid pressure when it detects that the front wheel (WF) is nearing another locked state due to the braking force and the front wheel acceleration (G) exceeding a second slip detection threshold (G2) set at a deceleration smaller than the first slip detection threshold (G1), the antilock brake control means (65) configured to find the second slip detection threshold (G2) from a data map on the basis of the estimated deceleration (Gs).

2. The antilock brake control system of claim 1, wherein the antilock brake control means (65) controls the brake pressure in order that the revolution speed (V) of the wheel (WF) becomes equal to the target front wheel revolution speed (Vm) by alternately repeating the release and restoration of the brake pressure.

3. The antilock brake control system of any one of claims 1 and 2, wherein the road surface friction estimating means (66) finds the estimated deceleration (Gs) by applying the detected return acceleration (Gf) to a data map specifying a relationship between the return acceleration (Gf) and the estimated deceleration (Gs).

4. The antilock brake control system of any one of claims 1 to 3, wherein
the wheel speed sensor (54) is provided to the front wheel (WF) of the motorcycle.

5. The antilock brake control system of claim 4, wherein
the revolution speed (V) is detected by the revolution speed sensor (54) configured to detect a passing state of a pulse generator (53) of a pulsar ring (52) rotating synchronously with the front wheel (WF), and
the antilock brake control system includes:
rear wheel revolution state detecting means (75) configured to detect whether or not a rear wheel (WR) of the motorcycle (1) is revolving; and
front wheel revolution speed sensor failure detecting means (67) configured to judge that any one of the pulsar ring (52) and the revolution speed sensor (54) is detached, or that the vehicle (1) is in a wheelie state, in a case where no revolution speed (V) of the front wheel (WF) is detected although the revolution of the rear wheel (WR) is detected by the rear wheel revolution state detecting means (75).

6. The antilock brake control system of any one of claims 4 and 5, wherein the rear wheel revolution state detecting means (75) judges that the rear wheel (WR) is revolving, in a case where it is detected that: an engine of the motorcycle (1) is in operation; a transmission of the motorcycle (1) is in an in-gear state; and a clutch is in a connected state.

7. The antilock brake control system of claim 5, wherein the revolution speed sensor (54) includes a first revolution speed sensor (54a) and a second revolution speed sensor (54b) which detect their respective pulse waveforms from the pulsar ring (52), the pulse waveforms having the same shape.

8. The antilock brake control system of claim 7, wherein the first revolution speed sensor (54a) and the second revolution speed sensor (54b) are arranged in their respective places which shift output pulses from the respective first and second revolution speed sensors (54a, 54b) from each other by a phase which is not a half phase.

## Patentansprüche

1. Steuerungssystem für eine Antiblockierbremse, umfassend:
einen Vorderrad-Drehzahlsensor (54), der dazu ausgelegt ist, eine Drehzahl (V) eines Rads (WF) eines Motorrads (1) zu erfassen; und
eine Antiblockierbrems-Steuereinrichtung (65), die dazu ausgelegt sind, eine Antiblockierbremssteuerung zum Lösen eines Blockierzustands des Rads (WF) durchzuführen, indem ein Bremsdruck eines Bremssystems des Rads (WF) in Übereinstimmung mit der erfassten Drehzahl (V) gesteuert wird, wobei:
dann, wenn eine Verzögerung (G), die auf der Grundlage der erfassten Drehzahl (V) berechnet ist, einen vorbestimmten Wert übersteigt, der eine erste Schlupferfassungsschwelle (G1) ist, die Antiblockierbrems-Steuereinrichtung (65) urteilt, dass das Vorderrad (WF) in einen Blockierzustand versetzt ist, und den Blockierzustand durch Steuern und somit Lösen des Bremsdrucks auflöst, der in Übereinstimmung mit einer Betätigung durch einen Fahrer erzeugt ist;
das Steuersystem für eine Antiblockierbremse eine Straßenoberflächenreibungs-Abschätzeinrichtung (66) umfasst, die dazu ausgelegt ist, eine geschätzte Verzögerung (Gs) aus einer Datenkarte auf der Grundlage einer Rückkehrbeschleunigung (Gf) zu finden, die auftritt, wenn die Drehung des Vorderrads (WF) in Verbindung mit der Steuerung und dem Lösen des Bremsdrucks zurückkehrt, wobei die geschätzte Verzögerung (Gs) wenigstens darauf basiert, wie groß die Straßenoberflächenreibung ist, und wobei die geschätzte Verzögerung (Gs) als eine Benchmark dafür dient, wie leicht das Fahrzeug (1) anhält; und
die Antiblockierbrems-Steuereinrichtung (65) eine Soll-Vorderrad-Drehzahl (Vm) in Übereinstimmung mit der geschätzten Verzögerung (Gs) berechnet und den Bremsdruck während der Antiblockierbremssteuerung derart steuert, dass die Drehzahl (V) gleich der Soll-Vorderrad-Drehzahl (Vm) wird; und
wobei die Antiblockierbrems-Steuereinrichtung (65) dazu ausgelegt ist, den Bremsfluiddruck wieder herzustellen, wenn die Drehzahl (V) des Vorderrads (WF) die Soll-Vorderrad-Drehzahl (Vm) erreicht, und den Bremsfluiddruck zu lösen, wenn sie feststellt, dass sich das Vorderrad (WF) einem weiteren Verriegelungszustand aufgrund der Bremskraft nähert und die Vorderradbeschleunigung (G) eine zweite Schlupferfassungsschwelle (G2) überschreitet, die auf eine Verzögerung kleiner als die erste Schlupferfassungsschwelle (G1) eingestellt ist, wobei die Antiblockierbrems-Steuereinrichtung (65) dazu ausgelegt ist, die zweite Schlupferfassungsschwelle (G2) aus einer Datenkarte auf Grundlage der geschätzten Verzögerung (Gs) zu finden.

2. Steuersystem für eine Antiblockierbremse nach Anspruch 1, wobei die Antiblockierbrems-Steuereinrichtung (65) den Bremsdruck derart steuert, dass die Drehzahl (V) des Rads (WF) gleich der Soll-Vorderrad-Drehzahl (Vm) wird, indem das Lösen und Wiederherstellen des Bremsdrucks alternierend wiederholt wird.

3. Steuersystem für eine Antiblockierbremse nach einem der Ansprüche 1 und 2, wobei die Straßenoberflächenreibungs-Abschätzeinrichtung (66) die geschätzte Verzögerung (Gs) durch Anwenden der erfassten Rückkehrbeschleunigung (Gf) auf eine Datenkarte findet, die einen Zusammenhang zwischen der Rückkehrbeschleunigung (Gf) und der geschätzten Verzögerung (Gs) spezifiziert.

4. Steuersystem für eine Antiblockierbremse nach einem der Ansprüche 1 bis 3, wobei der Radgeschwindigkeitssensor (54) beim Vorderrad (WF) des Motorrads bereitgestellt ist.

5. Steuersystem für eine Antiblockierbremse nach Anspruch 4, wobei
die Drehzahl (V) durch den Drehzahlsensor (54) erfasst ist, der dazu ausgelegt ist, einen Passierzustand eines Pulsgenerators (53) eines Pulsarrings (52) zu erfassen, der sich synchron mit dem Vorderrad (WF) dreht, und
das Antiblockierbrems-Steuersystem umfasst:
eine Hinterrad-Drehzustands-Erfassungseinrichtung (75), die dazu ausgelegt ist, zu erfassen, ob oder ob nicht sich ein Hinterrad (WR) des Motorrads (1) dreht; und
eine Vorderrad-Drehzahlsensor-Fehlererfassungseinrichtung (67), die dazu ausgelegt ist, zu urteilen, dass einer von dem Pulsarring (52) und dem Drehzahlsensor (54) abgelöst ist, oder dass sich das Fahrzeug (1) in einem Wheelie-Zustand befindet, falls keine Drehzahl (V) des Vorderrads (WF) erfasst wird, obwohl die Drehung des Hinterrads (WR) durch die Hinterrad-Drehzustand-Erfassungseinrichtung (75) erfasst wird.

6. Steuersystem für eine Antiblockierbremse nach einem der Ansprüche 4 und 5, wobei die Hinterrad-Drehzustand-Erfassungseinrichtung (75) urteilt, dass sich das Hinterrad (WR) dreht, falls erfasst wird, dass: ein Motor des Motorrads (1) in Betrieb ist; ein Getriebe des Motorrads (1) in einem Eingriffszustand ist; und eine Kupplung in einem Verbindungszustand ist.

7. Steuersystem für eine Antiblockierbremse nach Anspruch 5, wobei der Drehzahlsensor (54) einen ersten Drehzahlsensor (54a) und einen zweiten Drehzahlsensor (54b) umfasst, die ihre jeweiligen Pulswellenformen von dem Pulsarring (52) erfassen, wobei die Pulswellenformen die gleiche Gestalt aufweisen.

8. Steuersystem für eine Antiblockierbremse nach Anspruch 7, wobei der erste Drehzahlsensor (54a) und der zweite Drehzahlsensor (54b) an ihren jeweiligen Plätzen angeordnet sind, die Ausgangspulse von den jeweiligen ersten und zweiten Drehzahlsensoren (54a, 54b) um eine Phase gegeneinander verschieben, die keine halbe Phase ist.

## Revendications

1. Système de commande de frein antiblocage comprenant :
un capteur de vitesse de révolution de roue avant (54) configuré pour détecter une vitesse de révolution (V) d'une roue (WF) d'un motocycle (1) ; et
un moyen de commande de frein antiblocage (65) configuré pour réaliser une commande de frein antiblocage pour dissiper un état bloqué de la roue (WF) en régulant une pression de frein d'un système de frein de la roue (WF) conformément à la vitesse de révolution (V) détectée, dans lequel :
lorsqu'une décélération (G) calculée sur la base de la vitesse de révolution (V) détectée dépasse une valeur prédéterminée, qui est un premier seuil de détection de patinage (G1), le moyen de commande de frein antiblocage (65) juge que la roue avant (WF) est mise dans un état bloqué, et dissipe l'état bloqué en régulant et ainsi en relâchant la pression de frein produite conformément à une manipulation par un motocycliste ;
le système de commande de frein antiblocage comporte un moyen d'estimation de frottement de surface de route (66) configuré pour trouver une décélération estimée (Gs) à partir d'une carte de données sur la base d'une accélération de retour (Gf) qui se produit lorsque la révolution de la roue avant (WF) revient conjointement à la régulation et au relâchement de la pression de frein, la décélération estimée (Gs) étant basée au moins sur l'importance du frottement de surface de route, et la décélération estimée (Gs) servant de repère quant à la facilité avec laquelle le véhicule (1) s'arrête ; et
le moyen de commande de frein antiblocage (65) calcule une vitesse de révolution de roue avant cible (Vm) conformément à la décélération estimée (Gs), et régule la pression de frein pendant la commande de frein antiblocage afin que la vitesse de révolution (V) devienne égale à la vitesse de révolution de roue avant cible (Vm) ; et
le moyen de commande de frein antiblocage (65) est configuré pour rétablir la pression de fluide de frein lorsque la vitesse de révolution (V) de la roue avant (WF) atteint la vitesse de révolution de roue avant cible (Vm), et pour relâcher la pression de fluide de frein lorsqu'il détecte que la roue avant (WF) s'approche d'un autre état bloqué dû à la force de freinage et lorsque l'accélération de roue avant (G) dépasse un second seuil de détection de patinage (G2) fixé à une décélération plus petite que le premier seuil de détection de patinage (G1), le moyen de commande de frein antiblocage (65) étant configuré pour trouver le second seuil de détection de patinage (G2) à partir d'une carte de données sur la base de la décélération estimée (Gs).

2. Système de commande de frein antiblocage selon la revendication 1, dans lequel le moyen de commande de frein antiblocage (65) régule la pression de frein afin que la vitesse de révolution (V) de la roue (WF) devienne égale à la vitesse de révolution de roue avant cible (Vm) en répétant en alternance le relâchement et le rétablissement de la pression de frein.

3. Système de commande de frein antiblocage selon l'une quelconque des revendications 1 et 2, dans lequel le moyen d'estimation de frottement de surface de route (66) trouve la décélération estimée (Gs) en appliquant l'accélération de retour (Gf) détectée à une carte de données spécifiant une relation entre l'accélération de retour (Gf) et la décélération estimée (Gs).

4. Système de commande de frein antiblocage selon l'une quelconque des revendications 1 à 3, dans lequel
le capteur de vitesse de roue (54) est ménagé sur la roue avant (WF) de la moto.

5. Système de commande de frein antiblocage selon la revendication 4, dans lequel
la vitesse de révolution (V) est détectée par le capteur de vitesse de révolution (54) configuré pour détecter un état de passage d'un générateur d'impulsions (53) d'un anneau pulsar (52) tournant de façon synchrone avec la roue avant (WF), et
le système de commande de frein antiblocage comporte :
un moyen de détection d'état de révolution de roue arrière (75) configuré pour détecter si une roue arrière (WR) de la moto (1) tourne ou non ; et
un moyen de détection de défaillance de capteur de vitesse de révolution de roue avant (67) configuré pour juger si l'un quelconque de l'anneau pulsar (52) et du capteur de vitesse de révolution (54) est détaché, ou que le véhicule (1) est dans un état cabré, dans un cas où aucune vitesse de révolution (V) de la roue avant (WF) n'est détectée bien que la révolution de la roue arrière (WR) soit détectée par le moyen de détection d'état de révolution de roue arrière (75).

6. Système de commande de frein antiblocage selon l'une quelconque des revendications 4 et 5, dans lequel le moyen de détection d'état de révolution de roue arrière (75) juge que la roue arrière (WR) tourne, dans un cas où il est détecté que : un moteur du motocycle (1) est en fonctionnement ; une transmission de la moto du motocycle (1) est dans un état engrené ; et un embrayage est dans un état raccordé.

7. Système de commande de frein antiblocage selon la revendication 5, dans lequel le capteur de vitesse de révolution (54) comporte un premier capteur de vitesse de révolution (54a) et un second capteur de vitesse de révolution (54b) qui détectent leurs formes d'onde d'impulsion respectives à partir de l'anneau pulsar (52), les formes d'onde d'impulsion ayant la même forme.

8. Système de commande de frein antiblocage selon la revendication 7, dans lequel le premier capteur de vitesse de révolution (54a) et le second capteur de vitesse de révolution (54b) sont agencés à leurs endroits respectifs qui décalent des impulsions de sortie provenant des premier et second capteurs de vitesse de révolution (54a, 54b) respectifs les unes des autres d'une phase qui n'est pas une demi-phase.
